Europäisches Patentamt

European Patent Office

Office européen des brevets

(11) Publication number: 0 646 549 A1

# EUROPEAN PATENT APPLICATION

(21) Application number: 94115160.7

(22) Date of filing: 27.09.94

(51) Int. Cl.6: C02F 1/52

(30) Priority: 01.10.93 IT MI932093

(43) Date of publication of application:
05.04.95 Bulletin 95/14

(84) Designated Contracting States:
AT BE CH DE DK ES FR GB GR IE LI NL PT SE

(71) Applicant: CAFFARO S.p.A. Società per
l'Industria Chimica ed Elettrochimica
Via Borgonuovo 14
I-20121 Milano (IT)

(72) Inventor: Donelli, Giordano
Via del Santellone 63
I-25040 Brescia (IT)

Inventor: Dore, Fausto
Via Franzone 3
I-25127 Brescia (IT)
Inventor: Rosellini, Massimiliano
Via Zaccaria 19
I-25024 Leno (IT)
Inventor: Taliento, Raffaella
Via Roncaglie 1/B
I-25062 Concesio (IT)

(74) Representative: Forattini, Amelia
c/o Internazionale Brevetti
Ingg. ZINI, MARANESI & C. S.r.l.
Piazza Castello 1
I-20121 Milano (IT)

(54) Process for treating industrial wastewater with flocculants constituted by nitrates or basic nitrates of trivalent metals.

(57) Process for treating wastewater and/or water from industrial uses with flocculants constituted by at least one nitrate and/or basic nitrate of a trivalent metal, wherein the water thus clarified is then at least partially reused after a biological denitrification treatment, with great savings in consumption.

FIGURE 1

The present invention relates to a process for treating water from industrial uses with flocculants consisting of at least one nitrate and/or basic nitrate of a trivalent metal, such as iron, aluminum or chromium, so that the water thus clarified is then preferably reused in a closed circuit after an appropriate biological denitrification treatment.

It is known that the use of flocculants is often necessary in the treatment of industrial wastewater. Organic and inorganic products, such as polyelectrolytes and iron and aluminum salts, often in combination with each other, are furthermore known to be suitable for the purpose.

Among the products used as inorganic flocculants, ferric chloride, ferric sulfate, ferric chlorosulfate, aluminum sulfate and aluminum hydroxychlorides, also known as polyaluminum chlorides (PAC), are preferably employed. However, when using these inorganic flocculants it is practically impossible to fully or otherwise significantly recycle the wastewater, as would be convenient to avoid excessive use of water, especially in regions and seasons in which it is a scarcely available resource.

Total or partial recycling cannot be performed because the anion of the salt used as flocculant accumulates in the recycled water and can compromise the correct operation of the process and/or cause corrosion and/or deposits on equipment.

Surprisingly, it has now been discovered that iron, chromium or aluminum nitrates or their corresponding basic nitrates have an excellent performance as flocculants; furthermore, their use does not entail the drawback of the accumulation of the anion in process water, since the nitrate anion can be easily biodegraded in appropriate biological plants. Furthermore, the advantage of the invention is that it is possible, when necessary, to discharge the treated water into the surrounding environment without its harming.

The present invention therefore relates to a process for treating wastewater from industrial uses with flocculants consisting of at least one compound represented by the following formula (I):

$$Me_2(OH)_x(NO_3)_y \qquad (I)$$

where
Me       is Al, Fe(III) or Cr(III);
$x$        is a numeral between 0 and 5;
$y$        is a numeral between 1 and 6;
and the sum $x + y = 6$;
characterized in that the clarified wastewater, which contains the nitrate ions deriving from the flocculant, to be reused at least partially, is subjected to a biological denitrification treatment by using a denitrifying anoxic sludge that can denitrify in the absence of molecular oxygen,
with the proviso that the clarified wastewater, before being denitrified, contains:
(a) a carbon-containing organic substrate (C.O.D.) in an amount, with respect to the nitrogen expressed as nitric nitrogen, to meet at least the weight ratio C.O.D.: N = 5 : 1;
and
(b) an amount of phosphorus to meet at least the weight ratio P : N = 1 : 5.

Preferably, according to the invention, Me is Al in the general formula (I).

The term "anoxic sludge" designates, according to the present invention, a biological sludge which contains at least one facultative heterotrophic bacterium selected from the group consisting of Pseudomonas, Micrococcus, Archromobacter, Bacillus and Spirillum, which are able to denitrify in anoxic conditions, i.e. in the absence of atmospheric oxygen. These bacteria use the nitrate, instead of oxygen, as final electron acceptor in order to complete the enzymatic-catabolic chain that provides energy to the bacteria themselves. The waste catabolite is molecular nitrogen instead of water and carbon dioxide as in a normal aerobic catabolism. The optimum pH for the action of these bacteria is $7.8 \div 9$, preferably in the range $8 \div 8.5$. If the pH of the water to be treated is not within this range, it is necessary to add to the water itself the amount of acid or base required to bring it to optimum levels. The temperature at which the bacteria normally act is the ambient temperature, i.e. it has seasonal maximums and minimums that depend on the location of the plant. In any case it is preferable to keep the temperature of the water to be treated within the range between 5 and 50°C, preferably between 15 and 35°C.

The amount of the compound having formula (I) used according to the present invention as flocculant, is in the range between 10 and 1200 mg/l of polynitrate, preferably between 25 and 1000 mg/l. With this amount, the content of nitrates in the water to be denitrified remains in the range between 0.7 and 220 mg/l, preferably between 1.7 and 184 mg/l of nitrate as nitric nitrogen. The anoxic sludge required to denitrify water of this kind has a volatile suspended solid (VSS) content from 1000 to 4000 mg/l and preferably from 2500 to 3500 mg/l; this parameter gives indications as to the concentration of bacteria in the sludge. The time of contact of the water to be denitrified with the anoxic sludge, varies in the range between 10 minutes and 8.7 hours, preferably between 30 minutes and 2.9 hours. The anoxic sludge, in order to be able to denitrify, requires a certain amount of carbon-containing organic substrate, expressed as C.O.D. (chemical oxygen demand), equal to 5 times the amount of nitrate, expressed as nitric nitrogen, that is present. For the above given nitrate content ranges, the C.O.D. must be in the range between 3.5 and 1100 mg/1, preferably between 8.5 and 920 mg/l. If the water does not contain a sufficient amount of C.O.D., it is necessary to add some of it, in the form of methanol, in an amount by weight of 3/5 of the missing C.O.D.. For example, in order to eliminate 30 mg/l of nitric nitrogen in a water containing 70 mg/l of C.O.D., it is necessary to calculate the missing amount of C.O.D. by performing the following calculations:

(30 x 5) - 70 = 80 mg/l (amount of missing C.O.D.)
80 x 3/5 = 48 mg/l (amount of methanol to be added to the water).

Naturally it is also possible to add methanol in excess: in this case the C.O.D. will not be fully used up (the reaction with methanol is kinematically preferred).

The anoxic sludge used for denitrification, according to the invention, also requires a certain amount of phosphorus to be used as nutrient; said amount is equal to 1 mg/l of P for every 5 mg/l of nitric nitrogen to be eliminated. For the above indicated nitrate-content ranges, P must be in the range between 0.2 and 45 mg/l, preferably between 0.35 and 37 mg/l of P. If the water to be treated does not contain a sufficient amount of P, it is necessary to add some in the form of a phosphate, as a soluble salt or as phosphoric acid, so that the added phosphor matches the required amount or is slightly in excess.

The compounds having formula (I) which are used according to the present invention as flocculants, are known compounds and/or can be obtained according to known methods, for example (by way of non-limitative indication) as described in US patents 4297336, 3415618, 1192410, 2931706, 3655329, 3497459, 3544476, 3983221; GB Patents 2113666, 1357603, 2053172, FR Patent 2278319, or in the Japanese patent application published as no. 40-5044 and/or by means of methods described or indicated in the respective Gmelin volumes.

Preferably, the compounds having formula (I) can be obtained by reacting at temperatures in the range between 70 and 200°C and at pressures in the range between 1 and 10 bar, in a steel vessel covered with an enamelled acid-proof or in any case acid-resistant coating, nitric acid at a concentration of 30% to 70% by weight with the oxide or hydrated oxide or hydroxide of the metal Me in an amount that is between the stoichiometric value and 20% excess with respect to the stoichiometric value. When the product has reached the desired degree of basicity, the reaction is interrupted by cooling and/or by dilution with cold water, and the product is filtered to separate it from the unreacted oxides or hydroxides and from any solid impurities.

The above described process can be performed continuously in a series of cascade-connected reactors or in a single tubular reactor.

The oxides, hydrated oxides and/or hydroxides preferably used to prepare the compounds having formula (I) used as flocculants, according to the present invention, are listed hereafter:

-- oxides of Fe(II) or Fe(III) or mixtures thereof, which can be obtained from the process waste of lamination or drawing processes of steelworks or from the residues of catalytic reductions of nitrogen derivatives into amines;

-- hydrated alumina (Bayerite), which can be obtained from the extraction of bauxite;

-- precipitated aluminum hydroxide, which can be obtained by precipitating it with alkali from solutions of aluminum salts or as a residue of the anodic oxidation of aluminum;

-- bauxite;

-- trivalent chromium hydroxide or oxide.

The particle size of the crystalline hydrated oxides, hydroxides, oxides or of the minerals can vary in the range between 1 and 1000 $\mu$m.

Naturally this list is not to be considered limitative but is merely an example.

The compounds of formula (I) are more preferably obtained according to the methods described hereinafter in examples 1 to 3.

EXAMPLE 1

90 kg of 42% $HNO_3$ and 24 kg of anhydrous aluminum hydroxide (bayerite) with a particle size in the range between 10 and 100 $\mu$m, with a value of $d_{50}$ equal to 40 $\mu$m, were loaded in a 100-liter glass reactor equipped with an agitator, with reflux condenser and with electric heating.
The mixture was heated up to 114°C, which is the reflux temperature, for 20 hours.

After cooling to 80°C and filtration, the solution of the basic aluminum hydrate had a 12.5% content of $Al_2O_3$ and a 25% basicity, which corresponds to the formula:

$$Al_2(OH)_{1.5}(NO_3)_{4.5}$$

The excess of unreacted alumina, at the end of the reaction, was equal to 13.4% of the loaded alumina.

EXAMPLE 2

80.750 kg of 46.8% $HNO_3$ and 18.5 kg of anhydrous aluminum hydroxide with a particle size in the range between 10 and 100 $\mu$m and an average value of $d_{50}$ equal to 40 $\mu$m, were loaded in the reactor as described in example 1.

The mixture was heated to 115°C without reflux for 7 hours.

Analysis of a sample of basic aluminum nitrate solution revealed a content of $Al_2O_3$ equal to 11.7% and a basicity of 12%, which corresponds to the formula:

$$Al_2(OH)_{0.7}(NO_3)_{5.3}$$

18.5 kg of a 50% aqueous suspension of anhydrous aluminum hydroxide were then added to the reaction mixture.

After a further 15 hours of reflux reaction at 114°C, the reaction mixture was cooled and filtered.

Analysis of the solution of basic aluminum nitrate revealed a concentration equivalent to a 14.3% content of $Al_2O_3$ and a basicity of 38%, which corresponds to the formula:

$$Al_2(OH)_{2.3}(NO_3)_{3.7}$$

The excess of unreacted alumina, at the end of the reaction, was 9.3% of the total loaded alumina.

EXAMPLE 3

A 200-liter autoclave made of steel lined with an acid-proof enamelled coating, equipped with an agitator and with steam-based heating, was loaded with 180 kg of 42% $HNO_3$ and with 28 kg of anhydrous aluminum hydroxide with a particle size in the range between 10 and 100 $\mu$m, with an average value of $d_{50}$ equal to 40 $\mu$m.

The reaction mixture was heated up to 150°C and this temperature was maintained for 2 hours; the pressure reached a value of 4 bar.

After cooling and filtration, analysis of the basic aluminum nitrate solution revealed a 15% concentration of $Al_2O_3$ and a 42% basicity, which corresponds to the formula:

$$Al_2(OH)_{2.5}(NO_3)_{3.5}$$

The excess unreacted alumina, at the end of the reaction, was 3.9% of the loaded alumina.

The following examples 4, 5 and 6 exemplify but do not limit the water treatment process according to the present invention.

EXAMPLE 4

Wastewater from an industrial treatment, having the following chemical and physical characteristics:

| TURBIDITY | 430 NTU |
|---|---|
| pH | 8.1 |
| SUSPENDED SOLIDS | 227 mg/l |
| C.O.D. | 105 mg/l |

was treated with basic polyaluminum nitrate with 15% $Al_2O_3$ and 42% basicity, as obtained according to the method described in Example 3, by means of a Jar Test, in order to find the flocculant dosage that allows optimum clarification of this wastewater.

Amounts in the range between 75 and 150 mg/l were therefore tested; the final result was that the optimum one is 110 mg/l.

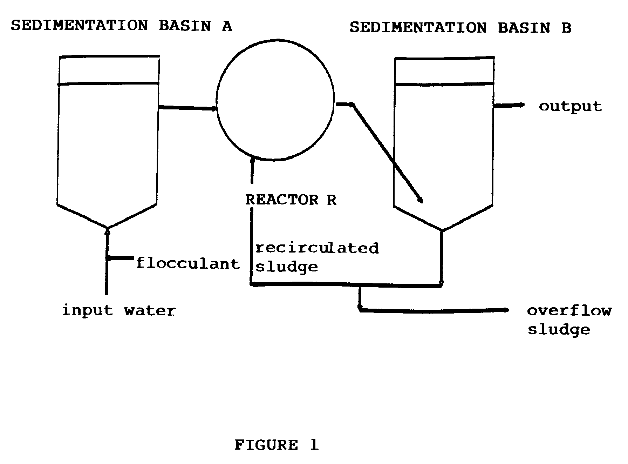

The second part of the test was carried out by means of a pilot plant the diagrammatic drawing of which is shown in Figure 1; said plant has the following characteristics:

| | |
|---|---|
| volume of sedimentation basin A: | 100 l |
| volume of reactor R: | 100 l |
| volume of sedimentation basin B: | 100 l |
| input water flow-rate: | 30 l/h |
| flocculant dosage: | 110 ml/h |
| flocculant solution concentration: | 30 g/l |

Denitrifying anoxic sludge, with a volatile suspended solid (VSS) concentration of 1589 mg/l, was placed inside the reactor R.

The time of contact between the wastewater and the flocculant, as well as the time of contact between the clarified water and the activated sludge, was 3.3 hours.

1500 liters of water to be treated were drawn from the industrial plant to be clarified with basic polyaluminum nitrate, obtained as described in Example 1, and then denitrified. In this way a treatment cycle entailing reuse of the treated water was simulated. The water was sent to the pilot plant shown in Figure 1, where it was subsequently clarified, in the sedimentation basin A, with the aluminum polynitrate containing 15% alumina and with 42% basicity, at a dosage of 110 mg/l, so that the clarified water, which contains the nitrate ions deriving from the flocculant, then passes into the anoxic reactor R for denitrification. Since the amount of C.O.D. in the water was not sufficient as substrate for denitrification, a certain amount (30 mg/l, for a total consumption of 43 g) of methanol was added; methanol is an excellent substrate for allowing the denitrifying bacteria to work well. It was furthermore necessary to add 20 mg/l of $Na_3PO_4$, since the denitrifying bacteria require a certain amount of P and the level of this nutrient was insufficient in the clarified water. The plant was kept in operation for 48 hours. During the first six hours, no samples were taken since a steady-state condition had not yet been reached and analyses would have consequently been meaningless. After these six hours of stabilization time, the samples to be analyzed were taken every two hours in two different points of the plant, i.e. at the inlet to the reactor R (which corresponds to the outlet of the sedimentation basin A) and at the outlet of the sedimentation basin B.

The average data obtained from the analysis of the samples are listed hereafter.

Sample leaving sedimentation basin A:

| | |
|---|---|
| TURBIDITY | 10 NTU |
| pH | 8.3 |
| SUSPENDED SOLIDS | 9 mg/l |
| nitric N | 18.6 mg/l |
| C.O.D. | 87 mg/l |

Sample leaving the plant:

| | |
|---|---|
| TURBIDITY | 12 NTU |
| pH | 8.5 |
| SUSPENDED SOLIDS | 10 mg/l |
| nitric N | < 0.1 mg/l |
| C.O.D. | 40 mg/l |

The characteristics of the water after the clarification and denitrification treatment allow its reuse as fresh water. By treating the wastewater of an industrial plant with this method it is thus possible to reuse the same wastewater in a closed circuit, with great savings in consumption.

EXAMPLE 5

Wastewater from an industrial treatment having the following chemical and physical characteristics:

| TURBIDITY | 40 NTU |
|---|---|
| pH | 7.4 |
| SUSPENDED SOLIDS | 35 mg/l |
| C.O.D. | 104 mg/l |

was treated with basic polyaluminum nitrate, containing 13.5% $Al_2O_3$ and having 60% basicity, by means of a Jar Test, in order to find the flocculant dosage that allows to improve its chemical and physical characteristics.

Amounts in the range between 5 and 50 mg/l were therefore tested, and the final result was that the optimum amount is 30 mg/l.

1500 liters of the wastewater were treated in the pilot plant described in Example 4; anoxic sludge with a VSS concentration of 1423 mg/l was placed inside the plant, specifically in the reactor R.

The water was first treated with basic aluminum polynitrate in the sedimentation basin A, obtaining clarified wastewater having the following characteristics:

| TURBIDITY | 6.2 NTU |
|---|---|
| pH | 7.8 |
| SUSPENDED SOLIDS | 5 mg/l |
| nitric N | 4.7 mg/l |
| C.O.D. | 93 mg/l |

After denitrification, which occurred in the anoxic reactor by means of the denitrifying sludge, and after subsequent settling in the second sedimentation basin, water with the following characteristics was obtained at the outlet:

| TURBIDITY | 6.4 NTU |
|---|---|
| pH | 7.9 |
| SUSPENDED SOLIDS | 6 mg/l |
| nitric N | < 0.1 mg/l |
| C.O.D. | 64 mg/l |

The characteristics of the water after the treatment improved markedly such as to allow its reuse as fresh water to be fed back into the plant in a closed cycle.

EXAMPLE 6

Wastewater from an industrial treatment, having the following chemical and physical characteristics:

| TURBIDITY | > 1000 NTU |
|---|---|
| pH | 7.3 |
| SUSPENDED SOLIDS | 954 mg/l |
| C.O.D. | 184 mg/l |

was treated with basic polyaluminum nitrate, containing 12.5% $Al_2O_3$ and having 25% basicity, obtained as described in Example 1, by means of a Jar Test, in order to find the flocculant dosage that allows to improve its chemical and physical characteristics.

Amounts in the range between 300 and 700 mg/l were therefore tested, and the final result was that the optimum dosage is 650 mg/l.

1500 liters of the wastewater were treated in the test plant described in Example 4; anoxic sludge with a VSS concentration of 3420 mg/l was placed inside the plant, specifically in the reactor R.

The water was first treated with basic aluminum polynitrate in the sedimentation basin A, obtaining a clarified wastewater having the following characteristics:

| TURBIDITY | 14 NTU |
|---|---|
| pH | 7.8 |
| SUSPENDED SOLIDS | 23 mg/l |
| nitric N | 118 mg/l |
| C.O.D. | 142 mg/l |

Since the amount of organic carbon present in the water was insufficient as a substrate for the denitrification, 300 mg/l of methanol were added, yielding a total consumption of 220 g; methanol is an excellent substrate for allowing denitrifying bacteria to work well.

After denitrification, which occurred in the anoxic reactor by means of the denitrifying sludge, and after subsequent settling in the second sedimentation basin, water with the following characteristics was obtained in output:

| TURBIDITY | 13 NTU |
|---|---|
| pH | 8.1 |
| SUSPENDED SOLIDS | 21 mg/l |
| nitric N | < 0.1 mg/l |
| C.O.D. | 47 mg/l |

The characteristics of the water after treatment improved markedly, allowing to use it as fresh water to be fed back into the plant in a closed cycle.

**Claims**

1. Process for treating wastewater from industrial uses with flocculants consisting of at least one compound having the following formula:

$$Me_2(OH)_x(NO_3)_y \qquad (I)$$

where
    Me    is Al, Fe(III) or Cr(III);
    x    is a numeral between 0 and 5;
    y    is a numeral between 1 and 6;
and the sum x + y = 6;
characterized in that the clarified wastewater, which contains the nitrate ions deriving from the flocculant, to be reused at least partially, is subjected to a biological denitrification treatment by using a denitrifying anoxic sludge that is able to denitrify in the absence of molecular oxygen,
with the proviso that the clarified wastewater, before being denitrified, contains:
    (a) a carbon-containing organic substrate (C.O.D.) in an amount, with respect to the nitrogen expressed as nitric nitrogen, to meet at least the weight ratio C.O.D.: N = 5:1;
    and
    (b) an amount of phosphorus to meet at least the weight ratio P : N = 1 : 5.

2. Process according to claim 1, wherein Me is Al.

3. Process according to claims 1 or 2, characterized in that the anoxic sludge contains at least one facultative heterotrophic bacterium selected from the group consisting of Pseudomonas, Micrococcus, Archromobacter, Bacillus and Spirillum.

4. Process according to one of claims 1 to 3, characterized in that an anoxic sludge is used that has a volatile suspended solid (VSS) content in the range between 1000 and 4000 mg/l.

7

5. Process according to claim 4, characterized in that the anoxic sludge has a volatile suspended solid content that is between 2500 and 3500 mg/l.

6. Process according to at least one of the preceding claims, characterized in that the time of contact of the clarified water with the anoxic sludge is in the range between 10 minutes and 8.7 hours.

7. Process according to claim 6, characterized in that the time of contact between the clarified water and the anoxic sludge is in the range between 30 minutes and 2.9 hours.

8. Process according to at least one of the preceding claims, characterized in that the denitrifying biological treatment is performed at a pH in the range between 7.8 and 9.

9. Process according to claim 8, characterized in that the pH is in the range between 8 and 8.5.

10. Process according to at least one of the preceding claims, characterized in that the denitrifying biological treatment is performed at a temperature in the range between 10 and 35°C.

11. Process according to at least one of the preceding claims, characterized in that an amount in the range between 10 and 1200 mg/l, with respect to the water to be clarified, of at least one flocculant having formula (I) is used.

12. Process according to the preceding claim, characterized in that the amount of flocculant, with respect to the water to be clarified, is between 25 and 1000 mg/l.

13. Process according to claim 11, characterized in that the content of nitrates in the clarified water is between 0.7 and 220 mg/l of nitric nitrogen.

14. Process according to claim 12, characterized in that the nitrate content in the clarified water is between 1.7 and 184 mg/l.

15. Process according to claim 13, characterized in that the amount of C.O.D. in the clarified water is between 3.5 and 1100 mg/l.

16. Process according to claim 15, characterized in that the amount of C.O.D. in the clarified water is between 8.5 and 920 mg/l.

17. Process according to claims 1 or 2, characterized in that if the C.O.D. is insufficient, an amount of a carbon-containing organic substrate, sufficient to at least reach the necessary C.O.D. content, is added to the clarified water prior to biological denitrification.

18. Process according to claim 17, characterized in that the necessary content is obtained by adding methanol in an amount, by weight, equal to 3/5 of the missing C.O.D..

19. Process according to claim 13, characterized in that, prior to being subjected to biological denitrification, the clarified water must contain an amount of phosphorus in the range between 0.2 and 45 mg/l.

20. Process according to claim 19, characterized in that the amount of phosphorus is in the range between 0.35 and 37 mg/l.

21. Process according to one of claims 1 to 20, characterized in that if the phosphorus is insufficient, a phosphate, in the form of a soluble salt and/or phosphoric acid, is added to the clarified water prior to its biological denitrification, in such an amount as to at least reach the necessary phosphorus value.

FIGURE 1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-38 38 864 (GIULINI CHEMIE GMBH)<br><br>* column 1, line 3 - column 2, line 66 *<br>* column 10; claims 1-3 *<br>--- | 1-3,11, 17 | C02F1/52 |
| A | G. RHEINHEIMER ET AL. 'STICKSTOFFKREISLAUF IM WASSER'<br>1988 , R.OLDENBOURG VERLAG , MÜNCHEN WIEN<br>* page 118, paragraph 1 - page 123, paragraph 4 *<br>* page 357, paragraph 3 - page 361, paragraph 1 *<br>--- | 1,8,10, 17-21 | |
| A | DATABASE WPI<br>Week 7842,<br>Derwent Publications Ltd., London, GB;<br>AN 78-75094A<br>& JP-A-53 103 654 (YAMADA KOGYO K. K.) 9 September 1978<br>* abstract *<br>----- | 1 | |
| | | | TECHNICAL FIELDS SEARCHED (Int.Cl.6)<br><br>C02F |

The present search report has been drawn up for all claims

| Place of search | Date of completion of the search | Examiner |
|---|---|---|
| THE HAGUE | 2 January 1995 | Teply, J |

EPO FORM 1503 03.82 (P04C01)